# EUROPÄISCHE PATENTSCHRIFT

(11) **EP 2 079 943 B1**
(45) Veröffentlichungstag und Bekanntmachung des Hinweises auf die Patenterteilung: **10.03.2010**
(21) Anmeldenummer: 07822174.4
(22) Anmeldetag: 05.11.2007
(51) Int. Cl.: F16H 61/12, F16H 61/688

(54) **VERFAHREN ZUR NOTBETÄTIGUNG EINES AUTOMATISIERTEN FAHRZEUG-DOPPELKUPPLUNGSGETRIEBES**
METHOD FOR THE EMERGENCY ACTUATION OF AN AUTOMATED DOUBLE CLUTCH TRANSMISSION OF A MOTOR VEHICLE
PROCÉDÉ D'ACTIONNEMENT DE SECOURS D'UNE BOÎTE DE VITESSES AUTOMATISÉE À DOUBLE EMBRAYAGE D'UN VÉHICULE

(30) Priorität: 17.11.2006 DE 102006054253
(43) Veröffentlichungstag der Anmeldung: 22.07.2009
(73) Patentinhaber: ZF Friedrichshafen AG, 88038 Friedrichshafen (DE)
(72) Erfinder: GIERER, Georg, 88079 Kressbronn (DE); POPP, Christian, 88079 Kressbronn (DE); SCHMIDT, Thilo, 88074 Meckenbeuren (DE); FRITZER, Anton, 88677 Markdorf (DE); HERRMANN, Markus, 88175 Scheidegg (DE)
(86) Internationale Anmeldenummer: PCT/EP2007/061845
(87) Internationale Veröffentlichungsnummer: WO 2008/058857

(56) Entgegenhaltungen:
- EP-A- 1 519 082
- EP-A- 1 767 825
- WO-A-03/074909
- DE-A1- 10 338 355
- DE-B3-102004 018 962

## Beschreibung

Die Erfindung betrifft ein Verfahren zur Notbetätigung eines automatisierten Fahrzeug-Doppelkupplungsgetriebes mit elektrohydraulischer Ansteuerung über eine Getriebesteuereinrichtung gemäß den Merkmalen des Oberbegriffs des Patentanspruchs 1, wie bekannt aus der EP 15 19082 A.

Doppelkupplungsgetriebe bestehen bekanntermaßen aus zwei Teilgetrieben mit jeweils einer Eingangswelle, die über jeweils eine zugeordnete, separat betätigbare Kupplung mit einem Antriebsmotor verbindbar sind. In dem ersten Teilgetriebe sind beispielsweise die Zahnräder für die ungeraden Gangstufen und in dem zweiten Teilgetriebe die Zahnräder für die geraden Gangstufen angeordnet.

Im Betrieb ist jeweils eine Gangstufe eines Teilgetriebes bei geschlossener Kupplung aktiv, während eine Gangstufe des anderen Teilgetriebes bei geöffneter Kupplung vorgewählt sein kann. Zum Gangwechsel wird dann die geschlossene Kupplung geöffnet sowie die geöffnete Kupplung geschlossen, und zwar in einer solchen Weise, dass im Wesentlichen keine Drehmomentunterbrechung im Antriebsstrang auftritt. Das Öffnen und Schließen der beiden Kupplungen sowie das Schalten der Gangstufen erfolgt über eine Getriebesteuereinrichtung. Als Aktoren für die Betätigung der Kupplungen sowie für das Betätigen der Schaltstufen werden im Allgemeinen elektrohydraulische Aktoren genutzt. Besondere Steuerungsmaßnahmen müssen dann getroffen werden, wenn eine Störung im Bereich des Getriebes, beispielsweise eines der Teilgetriebe auftritt.

In der DE 103 38 355 A1 wird ein Doppelkupplungsgetriebe beschrieben, bei welchem die elektrohydraulische Ansteuerung bei einem Ausfall bzw. bei einer Störung der Elektronik in einen Grundzustand übergeht, in welchem beide Kupplungen geöffnet sind, welches unabhängig von der momentanen Fahrsituation zu einer Unterbrechung des Antriebsdrehmomentes im Antriebsstrang führt. Dies ist in zumindest manchen Fahrsituationen unerwünscht, da das Fahrzeug dann bei einem Ausfall der Elektronik nur noch ausrollt, der Fahrer nicht vorgewarnt wird und das Fahrzeug nicht gezielt abstellen kann.

Die oben genannte DE 103 38 355 A1 schlägt zur Lösung dieses Problems ein Steuerungsverfahren vor, bei welchem bei einer Störung im Kupplungsbereich zumindest in manchen Schaltzuständen der Kupplungen die unmittelbar vor einem Ausfall der Kupplungssteuerung bzw. der Elektronik vorliegenden Schaltzustände der Kupplungen aufrechterhalten bleiben sollen. Um dies zu erreichen, weist das Doppelkupplungsgetriebe eine gesonderte "Zustandshaltehydraulik" auf. Bei einem Ausfall der Kupplungssteuerung bzw. der Elektronik steuert die Zustandshaltehydraulik zumindest in manchen Ausgangsschaltzuständen der Kupplungen über hydraulische Steuerleitungen die der ersten bzw. zweiten Kupplung zugeordnete erste bzw. zweite Hydraulik so an, dass die unmittelbar vor dem Ausfall der Elektronik vorliegenden Schaltzustände der Kupplungen aufrechterhalten bleiben. Dies erlaubt es zumindest, das momentane Fahrmanöver zu beenden und beispielsweise das Fahrzeug gezielt abzustellen.

In der DE 10 2004 018 962 B3 wird ein Verfahren zum Steuern eines Hydraulikkreises für ein Doppelkupplungsgetriebe vorgeschlagen, bei welchem mittels einer gesonderten Sicherheitsschaltung beim Auftreten eines Fehlers ein sicherer Zustand des Systems gewährleistet wird. Die Sicherheitsschaltung ist so ausgelegt, dass bei Auftreten eines Teilfehlers, der nur einer der beiden Kupplungen zugeordnet ist, diese Kupplung geöffnet wird, und dass bei Auftreten eines Gesamtfehlers, der beiden Kupplungen zugeordnet ist, die Kupplung, deren Kupplungsdruck bei Auftreten des Gesamtfehlers kleiner ist, geöffnet wird und die andere Kupplung, deren Kupplungsdruck bei Auftreten des Gesamtfehlers größer ist, nicht geöffnet wird, um die Übertragung von Drehmoment über diese Kupplung aufrechtzuerhalten. Bei Auftreten eines Teilfehlers kann das Fahrzeug über das nicht von dem Fehler betroffene Teilgetriebe weiter betrieben werden, so dass ein eingeschränkter Fahrbetrieb möglich ist. Bei Auftreten eines Gesamtfehlers wird der momentan bestehende Fahrzustand aufrechterhalten, so dass ein Fahrmanöver beendet und das Fahrzeug sicher abgestellt werden kann.

Sowohl bei der DE 103 38 355 A1 als auch bei der DE 10 2004 018 962 B3 ist vorgesehen, dass bei Auftreten einer Störung mittels der gesonderten Zustandshaltehydraulik bzw. der gesonderten Sicherheitsschaltung jeweils ein momentan anliegender Steuerdruck für zumindest eine der Kupplungen aufrechterhalten wird, welches einen erheblichen Hardwareaufwand im hydraulischen Schaltungssystem erfordert.

Der Erfindung liegt die Aufgabe zugrunde, ein Verfahren zur Notbetätigung eines automatisierten Fahrzeug-Doppelkupplungsgetriebes zu schaffen, welches mit einem möglichst geringen hardwareseitigen Schaltungsaufwand bei Auftreten einer Störung bei der Getriebesteuerung bzw. ihrer Sensorik bzw. ihrer Aktuatorik einen sicheren Fahrbetrieb zumindest so weit ermöglicht, dass ein gerade stattfindendes Fahrmanöver sicher beendet und das Fahrzeug gezielt abgestellt werden kann.

Der Erfindung liegt die Erkenntnis zugrunde, dass der hardwareseitige Schaltungsaufwand erheblich reduziert werden kann, wenn man auf die Bedingung, den Ansteuerungsdruck der Kupplungen bei Auftreten einer Störung aufrechtzuerhalten, verzichtet und stattdessen gegebenenfalls eine kurzzeitige Unterbrechung des Antriebsdrehmoments zulässt.

Die Erfindung geht daher aus von einem Verfahren zur Notbetätigung eines automatisierten Fahrzeug-Doppelkupplungsgetriebes mit elektrohydraulischer Ansteuerung über eine Getriebesteuereinrichtung, wobei nach dem Auftreten eines eine Störung des Getriebes und/oder seiner Getriebesteuereinrichtung anzeigenden Störungssignals zur Realisierung eines Notbetriebs des Getriebes eine Kupplung der Doppelkupplung geöffnet und die jeweils andere Kupplung mit Druck beaufschlagt ist. Dazu ist erfindungsgemäß vorgesehen, dass beim Auftreten des Störungssignals beide Kupplungen geöffnet und in einen sicheren Grundzustand überführt werden, und dass nach Erreichen des Grundzustandes eine der beiden Kupplungen wieder mit Betätigungsdruck beaufschlagt wird.

Bevorzugt wird das Verfahren so betrieben, dass nach Erreichen des Grundzustandes die Kupplung mit dem zum Störungszeitpunkt höheren Hydraulikdruck ausgewählt und wieder mit Betätigungsdruck beaufschlagt wird.

Diese Verfahrensabläufe umfassen nur Funktionen, die mit der ohnehin vorhandenen Schaltungshardware durchgeführt werden können, wobei lediglich zusätzlich eine Einrichtung bzw. eine Software vorgesehen werden muss, welche die Kupplung mit dem höheren Hydraulikdruck erkennt und auswählt. Aufwendige elektrohydraulische Schaltungselemente wie beim Stand der Technik, welche sicherstellen, dass der Hydraulikdruck an der ausgewählten Kupplung während des gesamten Überganges vom Normalbetrieb zum hydraulischen Notlauf aufrechterhalten bleibt, sind hier nicht erforderlich.

Um sicherzustellen, dass eine Wiederbeaufschlagung der ausgewählten Kupplung mit Betätigungsdruck nur dann erfolgt, wenn der aktuelle Fahrzustand des Fahrzeuges dies erlaubt, ist gemäß einer weiteren Ausgestaltung der Erfindung vorgesehen, dass nach Erreichen des sicheren Grundzustandes zunächst bestimmte, den aktuellen Fahrzustand des Fahrzeuges kennzeichnende Fahrzustandsgrößen erfasst werden, und dass die Wiederbeaufschlagung der ausgewählten Kupplung mit Betätigungsdruck nur dann erfolgt, wenn die Fahrzustandsgrößen innerhalb vorgegebener Grenzwerte liegen.

Als Fahrzustandsgrößen, die als Einstiegskriterien für eine eventuelle Wiederbeaufschlagung der ausgewählten Kupplung dienen können, sind beispielsweise die Motordrehzahl, die Getriebeabtriebsdrehzahl oder die Hydraulikpumpendrehzahl vorgesehen, wobei als vorgegebener Grenzwert eine jeweilige Mindestdrehzahl dieser Fahrzustandsgrößen verwendet wird.

Um das Getriebe, den Abtriebsstrang sowie letztlich den Fahrzustand des Fahrzeuges nicht zu gefährden und den Übergang in den Grundzustand und den Betriebszustand nach Wiederbeaufschlagung der Kupplung mit Betätigungsdruck so komfortabel wie möglich zu gestalten, ist gemäß einer weiteren Ausgestaltung der Erfindung vorgesehen, dass die Wiederbeaufschlagung der ausgewählten Kupplung in Verbindung mit einem Eingriff in die Motorsteuerung ("autarker Motoreingriff") erfolgt, durch die beispielsweise das Motor-Drehmoment oder die Motordrehzahl an den aktuellen Fahrzustand angepasst wird. Die Motorsteuerung, welche ebenfalls im Allgemeinen Bestandteil der Gesamtfahrzeugsteuerung ist, erhält ihre dazu erforderlichen Signale von an sich bekannten, den Fahrzustand erfassenden Sensoren, wie nicht im einzelnen ausgeführt zu werden braucht.

Um dem Gesamtsystem die für den Übergang in den Grundzustand und in den darauf folgenden eingeschränkten Fahrbetrieb erforderliche Zeit zu geben, ist gemäß einer weiteren Ausgestaltung des erfindungsgemäßen Verfahrens vorgesehen, dass bei Auftreten des Störungssignals das Motor-Drehmoment zunächst auf einen vorgegebenen unteren Wert begrenzt und für eine vorgegebene Übergangsspanne gehalten wird, während der das Öffnen der beiden Kupplungen, der Übergang in den sicheren Grundzustand, das Erfassen der Fahrzustandsgrößen und gegebenenfalls das Wiederbeaufschlagen der ausgewählten Kupplung mit Betätigungsdruck erfolgt, und dass nach der Übergangszeitspanne das Motor-Drehmoment auf ein vorgegebenes Notlaufdrehmoment gebracht und begrenzt wird.

Auslöser des autarken Motoreingriffs kann z.B. ein so genanntes "alive-counter"-Signal der elektronische Getriebesteuereinrichtung sein, welches in der Weise funktioniert, dass die Störungsüberwachung mittels eines Signalgebers erfolgt, welcher in regelmäßigen Zeitabständen ein die ordnungsgemäße Funktion des Getriebes anzeigendes Funktionssignal an die Motorsteuerung abgibt, wobei der genannte Eingriff in die Motorsteuerung zur Realisierung des Notbetriebs nach Ausbleiben des Funktionssignals und Ablauf einer vorgegebenen Filter-Zeitspanne erfolgt.

Die ordnungsgemäße Funktion des Getriebes wird gemäß einer weiteren Ausgestaltung der Erfindung über diesem zugeordnete Drehzahlsensoren, Drucksensoren, Drehmomentsensoren, Wegesensoren und dergleichen überwacht, die ihre Sensorsignale an die Getriebesteuereinrichtung übermitteln.

Wie weiter vorne bereits erwähnt wurde, wird durch das erfindungsgemäße Verfahren unter der Voraussetzung, dass die Einstiegskriterien erfüllt sind, zumindest ein Zustand hergestellt, welcher eine Fortsetzung des aktuellen Fahrmanövers, ein Weiterfahren bis zur nächsten Werkstatt oder gegebenenfalls ein gezieltes Abstellen des Fahrzeuges erlaubt. Gemäß einer weiteren Ausgestaltung der Erfindung ist vorgesehen, dass nach Ablauf der Übergangszeitspanne, während der das Öffnen der Kupplungen, der Übergang in den sicheren Grundzustand und das Erfassen der Fahrzustandsgrößen erfolgt, die Getriebesteuereinrichtung in einen Ersatzsteuerungsmodus wechselt, bei welchem der betroffene hydraulische Zweig, also beispielsweise das betroffene Teilgetriebe stillgelegt ist und ein eingeschränkter Fahrbetrieb mit beispielsweise ein Schalten der dem intakten Teilgetriebe zugeordneten Schaltstufen aufrechterhalten werden kann.

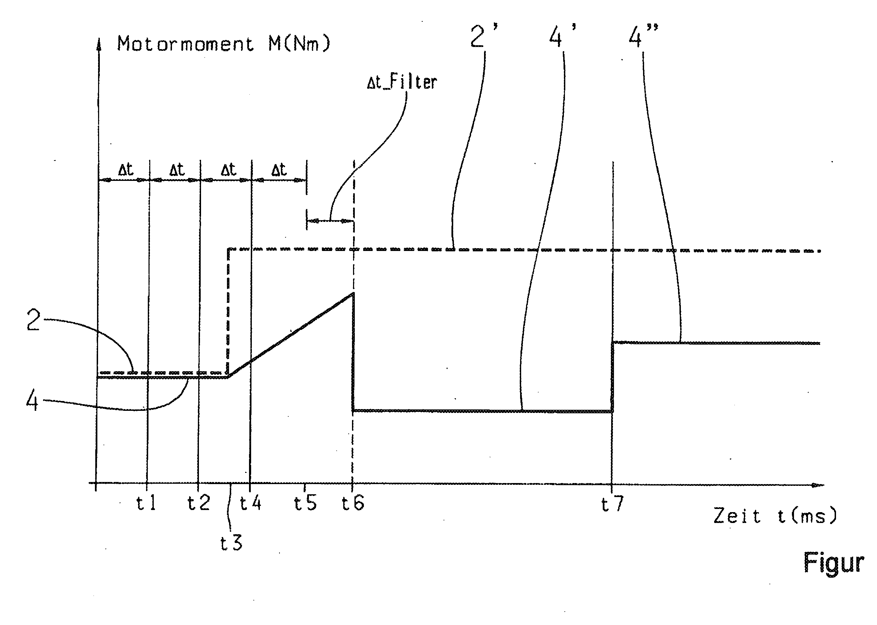

Die Erfindung wird im Folgenden anhand der beiliegenden Zeichnung näher erläutert.

Die einzige Figur zeigt ein Ablaufdiagramm für einen Eingriff in die Motorsteuerung mit Hilfe eines alive-counter-Signals.

Auf der Ordinate des in der Zeichnung dargestellten Achsensystems ist das Motor-Drehmoment M, auf der Abszisse die Zeit t aufgetragen. Die elektronische Getriebesteuereinrichtung, die mit Hilfe der oben genannten Sensoren den ordnungsgemäßen Betrieb des Getriebes überwacht, gibt in regelmäßigen Zeitabständen Δt ein die ordnungsgemäße Funktion des Getriebes anzeigendes Funktionssignal an die Motorsteuerung. Wie die Zeichnung anhand der durchgezogenen senkrechten Linen erkennen lässt, wird ein derartiges Funktionssignal zu den Zeitpunkten t₁, t₂ und t₄ erzeugt.

Zwischen den Zeitpunkten t₂ und t₄, d.h. im Zeitpunkt t₃ ergeht eine beispielsweise durch den Fahrer oder durch einen Tempolimit-Begrenzer verursachte Anforderung, das gestrichelt dargestellte Soll-Drehmoment 2, welches bis zu diesem Zeitpunkt mit dem durchgehend dargestellten Ist-Drehmoment 4 übereinstimmte, auf einen Wert 2' zu erhöhen. Dieser Vorgang wird von der Getriebesteuereinrichtung als ordnungsgemäße Funktion gewertet, so dass danach, also im Zeitpunkt t₄ noch ein entsprechendes Funktionssignal ergeht.

Vom Zeitpunkt t₃ an steigt das Ist-Drehmoment 4 entsprechend der vorliegenden Anforderung mit einem schrägen Verlauf an.

Zwischen den Zeitpunkten t₄ und t₅ erfolgt eine Störung, so dass das für den Zeitpunkt t₅ vorgesehene Funktionssignal ausbleibt. Nach einer Filter-Zeitspanne Δt-Filter reagiert die Motorsteuerung in der Weise, dass diese ab dem Zeitpunkt t₆ das Ist-Drehmoment 4 auf einen vorgegebenen unteren Wert 4' abgesenkt und für eine vorgegebene Übergangszeitspanne t₆ bis t₇ gehalten wird.

Während der Übergangszeitspanne t₆ bis t₇ erfolgt das Öffnen der beiden Kupplungen, der Übergang in den sicheren Grundzustand und das Erfassen der Fahrzustandsgrößen. Falls die weiter vorne beschriebenen Einstiegskriterien vorliegen, erfolgt im Zeitpunkt t₇ nach einer Wiederbeaufschlagung der ausgewählten Kupplung mit Betätigungsdruck eine Anhebung des Ist-Drehmomentes auf ein vorgegebenes Notlauf-Drehmoment 4", welches zumindest ein Beenden des aktuellen Fahrmanövers und ein gezieltes Abstellen des Fahrzeuges oder auch einen Übergang in den vorne beschriebenen Ersatzsteuerungsmodus erlaubt.

### Bezugszeichen

- 2: Soll-Drehmoment
- 2': Soll-Drehmoment
- 4: Ist-Drehmoment
- 4': unterer Wert des Ist-Drehmomentes
- 4": Notlauf-Drehmoment

- Δt: Zeitabstand
- Δt-Filter: Filter-Zeitspanne
- t₁ - t₇: Zeitpunkte
- t: Zeit
- M: Motor-Drehmoment

## Patentansprüche

1. Verfahren zur Notbetätigung eines automatisierten Fahrzeug-Doppelkupplungsgetriebes mit elektrohydraulischer Ansteuerung über eine Getriebesteuereinrichtung, wobei nach dem Auftreten eines eine Störung des Getriebes und/oder seiner Getriebesteuereinrichtung anzeigenden Störungssignals zur Realisierung eines Notbetriebs des Getriebes eine Kupplung der Doppelkupplung geöffnet und die jeweils andere Kupplung mit Druck beaufschlagt ist, wobei beim Auftreten des Störungssignals beide Kupplungen geöffnet und in einen sicheren Grundzustand überführt werden, und nach Erreichen des Grundzustandes eine der beiden Kupplungen wieder mit Betätigungsdruck beaufschlagt wird, **dadurch gekennzeichnet, dass** nach Erreichen des sicheren Grundzustandes bestimmte, den aktuellen Fahrzustand des Fahrzeuges kennzeichnende Fahrzustandsgrößen erfasst werden, und dass eine Wiederbeaufschlagung einer ausgewählten Kupplung mit Betätigungsdruck nur erfolgt, wenn die Fahrzustandsgrößen innerhalb vorgegebener Grenzwerte liegen.

2. Verfahren nach Anspruch 1, **dadurch gekennzeichnet, dass** nach Erreichen des Grundzustandes die Kupplung mit dem zum Störungszeitpunkt höheren Hydraulikdruck ausgewählt und wieder mit Betätigungsdruck beaufschlagt wird.

3. Verfahren nach Anspruch 1 oder 2, **dadurch gekennzeichnet, dass** als Fahrzustandsgrößen die Motordrehzahl, die Getriebeabtriebsdrehzahl und/oder eine Hydraulikpumpendrehzahl sowie als vorgegebener Grenzwert eine jeweilige Mindestdrehzahl verwendet werden.

4. Verfahren nach zumindest einem der Ansprüche 1 bis 3, **dadurch gekennzeichnet, dass** die Wiederbeaufschlagung der ausgewählten Kupplung mit Betätigungsdruck in Verbindung mit einem Eingriff in eine Motorsteuerung erfolgt, durch die beispielsweise das Motor-Drehmoment oder die Motordrehzahl an den aktuellen Fahrzustand angepasst wird.

5. Verfahren nach Anspruch 4, **dadurch gekennzeichnet, dass** bei Auftreten des Störungssignals das Motor-Drehmoment auf einen vorgegebenen unteren Wert (4') begrenzt und für eine vorgegebene Übergangszeitspanne (t₆ bis t₇) gehalten wird, während der das Öffnen der beiden Kupplungen, der Übergang in den sicheren Grundzustand, das Erfassen der Fahrzustandsgrößen und gegebenenfalls das Wiederbeaufschlagen der ausgewählten Kupplung mit Betätigungsdruck erfolgt, und dass nach der Übergangszeitspanne das Motor-Drehmoment auf ein vorgegebenes Notlauf-Drehmoment (4") angehoben sowie begrenzt wird.

6. Verfahren nach zumindest einem der Ansprüche 1 bis 5, **dadurch gekennzeichnet, dass** die Störungsüberwachung mittels eines Signalgebers erfolgt, welcher in regelmäßigen Zeitabständen (Δt) ein die ordnungsgemäße Funktion des Getriebes anzeigendes Funktionssignal an die Motorsteuerung gibt, wobei der Eingriff in die Motorsteuerung nach Ausbleiben des Funktionssignals und Ablauf einer vorgegebenen Filter-Zeitspanne (Δt-Filter) erfolgt.

7. Verfahren nach Anspruch 6, **dadurch gekennzeichnet, dass** die ordnungsgemäße Funktion des Getriebes über diesem zugeordnete Drehzahlsensoren, Drucksensoren, Drehmomentsensoren, Wegesensoren und dergleichen überwacht wird, die ihre Sensorsignale an den Signalgeber übermitteln.

8. Verfahren nach einem der Ansprüche 5 bis 7, **dadurch gekennzeichnet, dass** nach Ablauf der Übergangszeitspanne (t₆ bis t₇) die Getriebesteuereinrichtung in einen Ersatz-Steuerungsmodus umgeschaltet wird.

## Claims

1. Method for the emergency actuation of an automated vehicle dual-clutch gearbox having electrohydraulic actuation via a gearbox control device, one clutch of the dual clutch being open and the respectively other clutch being loaded with pressure in order to realize emergency operation of the gearbox after a disruption signal has occurred which indicates a disruption of the gearbox and/or of its gearbox control device, both clutches being opened and being transferred into a safe basic state when the disruption signal occurs, and one of the two clutches being loaded with actuating pressure again after the basic state is reached, **characterized in that,** after the safe basic state is reached, defined driving state variables which characterize the actual driving state of the vehicle are determined, and **in that** a selected clutch is loaded with actuating pressure again only when the vehicle state variables lie within predefined limiting values.

2. Method according to Claim 1, **characterized in that,** after the basic state is reached, the clutch having the higher hydraulic pressure at the disruption instant is selected and loaded with actuating pressure again.

3. Method according to Claim 1 or 2, **characterized in that** the engine speed, the gearbox output speed and/or a hydraulic-pump speed are used as driving state variables and a respective minimum speed is used as predefined limiting value.

4. Method according to at least one of Claims 1 to 3, **characterized in that** the selected clutch is loaded with actuating pressure again in conjunction with an intervention in an engine controller, by which, for example, the engine torque or the engine speed is adapted to the actual driving state.

5. Method according to Claim 4, **characterized in that,** when the disruption signal occurs, the engine torque is limited to a predefined lower value (4') and is held for a predefined transition time period (t₆ to t₇), while the two clutches are opened, the transition into the safe basic state is carried out, the driving state variables are determined and optionally the selected clutch is loaded with actuating pressure again, and **in that**, after the transition time period, the engine torque is raised and limited to a predefined emergency running torque (4'').

6. Method according to at least one of Claims 1 to 5, **characterized in that** the disruption monitoring takes place by means of a signal generator which transmits a function signal which indicates the correct function of the gearbox to the engine controller at regular time intervals (Δt), the intervention in the engine controller taking place after the non-appearance of the function signal and expiration of a predefined filter time period (Δt-Filter).

7. Method according to Claim 6, **characterized in that** the correct function of the gearbox is monitored via speed sensors assigned to it, pressure sensors, torque sensors, displacement sensors and the like which transmit their sensor signals to the signal generator.

8. Method according to one of Claims 5 to 7, **characterized in that** the gearbox control device is switched over into an alternative control mode after expiration of the transition time period (t₆ to t₇).

## Revendications

1. Procédé pour l'actionnement de secours d'une boîte de vitesses automatisée à double embrayage d'un véhicule, comprenant une commande électrohydraulique par le biais d'un dispositif de commande de boîte de vitesses, dans lequel, après l'apparition d'un signal de perturbation indiquant une perturbation de la boîte de vitesses et/ou de son dispositif de commande de boîte de vitesses, pour la mise en oeuvre d'un fonctionnement de secours de la boîte de vitesses, un embrayage du double embrayage est ouvert et l'autre embrayage est sollicité par une pression, et lors de l'apparition du signal de perturbation, les deux embrayages sont ouverts et transférés dans un état de base sûr, et après l'obtention de l'état de base, l'un des deux embrayages est à nouveau sollicité par une pression d'actionnement, **caractérisé en ce que** des valeurs d'état du véhicule déterminées après l'obtention de l'état de base sûr, caractérisant l'état de conduite actuel du véhicule, sont détectées, et **en ce qu'**une sollicitation renouvelée d'un embrayage sélectionné avec une pression d'actionnement n'a lieu que lorsque les valeurs d'état du véhicule se situent à l'intérieur de valeurs limites prédéterminées.

2. Procédé selon la revendication 1, **caractérisé en ce qu'**après l'obtention de l'état de base, l'embrayage avec la pression hydraulique la plus élevée à l'instant de la perturbation est sélectionné et est à nouveau sollicité par la pression d'actionnement.

3. Procédé selon la revendication 1 ou 2, **caractérisé en ce que** l'on utilise comme valeurs d'état du véhicule le régime du moteur, le régime de sortie de la boîte de vitesses et/ou un régime de la pompe hydraulique ainsi qu'un régime minimum respectif en tant que valeur limite prédéterminée.

4. Procédé selon au moins l'une quelconque des revendications 1 à 3, **caractérisé en ce que** la sollicitation renouvelée de l'embrayage sélectionné avec la pression d'actionnement s'effectue en liaison avec une intervention dans une commande du moteur, par laquelle par exemple le couple du moteur ou le régime du moteur est adapté à l'état de conduite actuel.

5. Procédé selon la revendication 4, **caractérisé en ce que** lors de l'apparition du signal de perturbation, le couple du moteur est limité à une valeur inférieure prédéterminée (4') et est maintenu pendant un intervalle de temps de transition prédéterminé (t₆ à t₇), pendant lequel l'ouverture des deux embrayages, la transition dans l'état de base sûr, la détection des valeurs d'état du véhicule et éventuellement la sollicitation renouvelée de l'embrayage sélectionné à la pression d'actionnement ont lieu, et **en ce qu'**après l'intervalle de temps de transition, le couple du moteur est augmenté et limité à un couple de secours prédéterminé (4").

6. Procédé selon au moins l'une quelconque des revendications 1 à 5, **caractérisé en ce que** la surveillance des perturbations s'effectue au moyen d'un générateur de signaux qui fournit à intervalles de temps réguliers (Δt) un signal de fonctionnement indiquant le fonctionnement correct de la boîte de vitesses à la commande du moteur, l'intervention dans la commande du moteur s'effectuant après l'absence du signal de fonctionnement et le déroulement d'un intervalle de temps filtre prédéterminé (Δt-filtre).

7. Procédé selon la revendication 6, **caractérisé en ce que** le fonctionnement correct de la boîte de vitesses est surveillé par le biais de capteurs de régime, capteurs de pression, capteurs de couple, capteurs de position et similaires associés à celle-ci, qui communiquent leurs signaux de capteur au générateur de signaux.

8. Procédé selon l'une quelconque des revendications 5 à 7, **caractérisé en ce qu'**après le déroulement de l'intervalle de temps de transition (t₆ à t₇), le dispositif de commande de la boîte de vitesses est commuté dans un mode de commande de remplacement.
